# NEUE EUROPÄISCHE PATENTSCHRIFT

(11) **EP 2 179 642 B2**
(45) Veröffentlichungstag und Bekanntmachung des Hinweises auf die Entscheidung über den Einspruch: **22.12.2021**
(45) Hinweis auf die Patenterteilung: 28.12.2011
(21) Anmeldenummer: 09165933.4
(22) Anmeldetag: 21.07.2009
(51) Int. Cl.: A01F 29/10

(54) **Landwirtschaftliche Erntemaschine**
Agricultural harvester
Moissonneuse agricole

(30) Priorität: 19.09.2008 DE 102008048060
(43) Veröffentlichungstag der Anmeldung: 28.04.2010
(73) Patentinhaber: CLAAS Selbstfahrende Erntemaschinen GmbH, 33428 Harsewinkel (DE)
(72) Erfinder: Tilly, Thomas, 48231, Warendorf (DE); Erdmann, Hubert, 33739, Bielefeld (DE)
(74) Vertreter: CLAAS Gruppe

(56) Entgegenhaltungen:
- EP-A1- 0 848 902
- EP-A1- 1 046 333
- EP-A1- 1 854 344
- EP-A1- 1 997 366
- CA-A1- 1 205 640
- US-A1- 2008 104 937

## Beschreibung

Die Erfindung betrifft eine landwirtschaftliche Erntemaschine mit einer Erntegutaufnahmeeinrichtung und einer Einzugsvorrichtung, die zur Beseitigung einer Verstopfung und/oder eingedrungener unerwünschter Fremdkörper reversierbar ist nach dem Oberbegriff des Anspruchs 1.

Agrotechnisch- und wachstumsbedingte Anhäufungen von Erntegut auf den Ernteflächen führen, wie allgemein bekannt, zu einem Erntegutstau an den Fördereinrichtungen und Arbeitsorganen einer Erntemaschine, beispielsweise einem Vorsatzgerät und/oder an der Einzugsvorrichtung eines Feldhäckslers und können solche Gutstauungen bewirken, die mit dem Totalausfall der Erntemaschine verbunden sind. Zur Beseitigung von Verstopfungen im Einzugsbereich des Feldhäckslers muss die Drehrichtung der Einzugswalzen und der Presswalzen umkehrbar sein.

Feldhäcksler sind im Stand der Technik in der Regel gegen die Beschädigung oder Zerstörung der Häckseltrommel oder anderer nachfolgender Arbeitsorgane und Bauteile mit Fremdkörpererkennungseinrichtungen ausgestattet. Wenn durch das Auslösen der Fremdkörpererkennungseinrichtung ein Reversieren der Erntegutaufnahmeeinrichtung und/oder der Einzugsvorrichtung notwendig ist, ist in der Regel ein Schalter zu betätigten, mit welchem gleichzeitig der Reversiervorgang in der Erntegutaufnahmeeinrichtung und in der Einzugsvorrichtung gestartet wird. Nachteilig an dieser Ausführung ist insbesondere, dass neben der Beseitigung der Verstopfung insbesondere in der Einzugsvorrichtung gleichzeitig in der Erntegutaufnahmeeinrichtung schon vorhandenes Erntegut wieder heraustransportiert und auf dem Feldboden fällt, was insbesondere bei Feldeinsätzen mit häufigen Reversiervorgängen zu einem nicht zu vernachlässigenden Ernteverlust führen kann.

Der vorliegenden Erfindung liegt daher die Aufgabe zugrunde, die im Stand der Technik beschriebenen Nachteile zu vermeiden und insbesondere eine landwirtschaftliche Erntemaschine vorzuschlagen, die beim Reversiervorgang eine vollständige Beseitigung der Störung ermöglicht, jedoch zu weniger Erntegutverlusten führt.

Dieses Problem wird erfindungsgemäß durch die Lehre des Patentanspruchs 1 gelöst, wobei in den weiteren Patentansprüche Merkmale aufgeführt sind, die die Lösung in vorteilhafter Weise weiterentwickeln.

Weitere vorteilhafte Ausgestaltungen sind Gegenstand weiterer Unteransprüche und werden nachfolgend anhand von einer Zeichnung näher erläutert.

Indem die Steuereinrichtung derart auf den Antrieb der Erntegutaufnahmeeinrichtung und Einzugsvorrichtung einwirkt, dass beim Auftreten einer Verstopfung und/oder eingedrungener Fremdkörper ein getrenntes Reversieren der Erntegutaufnahmeeinrichtung und der Einzugsvorrichtung bewirkbar ist, kann in vorteilhafter Weise eine Beseitigung der Störung sichergestellt werden, die einerseits eine vollständige Störungsbehebung zulässt, andererseits zu weniger Ernteverlusten führt, bedingt dadurch, dass nicht gleichzeitig die Erntegutaufnahmeeinrichtung und Einzug reversiert werden müssen, sondern auch getrennt, so dass im besten Fall nur die Einzugsvorrichtung reversiert werden muss, nicht jedoch auch die Erntegutaufnahmeeinrichtung, so dass das sich in der Erntegutaufnahmeeinrichtung noch befindende Erntegut dem weiteren Ernteprozess zugeführt werden kann. Indem zugleich die Steuereinrichtung mit wenigstens einem in der Fahrerkabine angeordneten Bedienelement in Wirkverbindung steht, wobei die Steuereinrichtung das getrennte Reversieren der Erntegutaufnahmeeinrichtung und der Einzugsvorrichtung bewirkt, wenn das wenigstens eine Bedienelement betätigt wird, wird erfindungsgemäß sichergestellt dass der Bediener der Erntemaschine von der Fahrerkabine aus den störungsbeseitigenden Reversiervorgang möglichst erntegutverlustarm steuern kann. Erfindungsgemäß weist das Bedienelement wenigstens zwei Schaltstellungen auf, um auf einfache Weise das getrennte Reversieren der Erntgutaufnahmeeinrichtung und der Einzugsvorrichtung bewirken zu können, wobei das Reversieren der Einzugsvorrichtung aktiviert wird, wenn die erste Schaltstellung eingenommen wird und zusätzlich das Reversieren der Erntegutaufnahmeeinrichtung aktiviert wird, wenn die zweite Schaltstellung eingenommen wird, so dass der Bediener im Störungsfall komfortabel mittels nur einem Bedienelement das getrennte Reversieren der Erntegutaufnahmeeinrichtung und Einzugvorrichtung bewirken kann, ohne weitere Aktionen vornehmen bzw. mehrere Bedienelemente bedienen zu müssen. Dass zunächst die Erntegutaufnahmeeinrichtung und dann zusätzlich die Einzugsvorrichtung reversiert wird, liegt im Rahmen der Erfindung.

Vorteilhaft liegt es im Rahmen der Erfindung, dass den wenigstens zwei Schaltstellungen jeweils zumindest eine frei definierbare Reversier-Steuerfunktion bezüglich des Reversierens der Erntegutaufnahmeeinrichtung und der Einzugsvorrichtung zugeordnet werden kann, so dass zur Störungsbeseitigung das getrennte Reversieren unter Berücksichtigung der Präferenzen des Bedieners erfolgen kann. Vorzugsweise werden die Reversier-Steuerfunktionen vom Bediener vom Bediener in der Steuereinrichtung hinterlegt. Denkbar ist zudem, dass definierte Reversier-Steuerfunktionen in Abhängigkeit von der jeweils angebauten Erntegutaufnahmeeinrichtung automatisch vorgegeben werden, so dass der Bediener bei der Steuerung des Reversiervorgangs eine erhebliche Entlastung erfährt.

Um ein unerwünschtes Aktivieren des Reversiervorgangs der Erntegutaufnahmeeinrichtung bzw. Einzugsvorrichtung zu vermeiden, können in einer vorteilhaften Weiterbildung der Erfindung die Reversier-Steuerfunktionen nur aktiviert werden, wenn wenigstens eine Detektionsvorrichtung zur Detektion von Fremdkörpern und/oder wenigstens ein Sensor zur Ermittlung von Überlastungen der Erntemaschine anspricht.

Dadurch, dass das Aktivieren der der ersten Schaltstellung zugeordneten Reversier-Steuerfunktion nur im betätigten Zustand des Bedienelementes erfolgt, ist ein Sicherheitsvorteil dahingehend gegeben, dass die hinterlegte Reversier-Steuerfunktion eine permanente Aktion des Bedieners und somit dessen Aufmerksamkeit erfordert.

In einer weiteren vorteilhaften Weiterbildung der Erfindung erfolgt die Freigabe des Schaltvorgangs von der ersten Schaltstellung in die wenigstens eine weitere Schaltstellung in Abhängigkeit von Betriebsparametern der Erntemaschine. Vorteilhaft kann dadurch verhindert, dass ein ungeübter Bediener beispielhaft nicht nur die Einzugsvorrichtung sondern auch die Erntegutaufnahmeeinrichtung reversiert, obwohl dies mangels einer Überlastung der Erntegutaufnahmeeinrichtung nicht notwendig wäre, so dass vorteilhaft unnötige Erntegutverluste verhindert werden können. Vorzugsweise sind dabei die Betriebsparameter die Art der Erntegutaufnahmeeinrichtung und/oder die Beaufschlagung der Erntemaschine mit Erntegut und/oder die Belastung der Arbeitsorgane der Erntemaschine.

Nach einer besonderen Ausführungsform der Erfindung werden die den Schaltstellungen zugeordneten Reversier-Steuerfunktionen mit Einnahme der jeweiligen Schaltstellung für ein bestimmtes Zeitintervall aktiviert, so dass insbesondere ungeübte Bediener eine Unterstützung bezüglich der notwendigen zeitlichen Dauer des getrennten Reversierens der Erntegutaufnahmeeinrichtung oder der Einzugsvorrichtung erhalten.

Nach einer weiteren Ausgestaltung der Erfindung kann das Bedienelement als mehrstufiger Dreh- oder Schiebeschalter ausgebildet sein, wobei den jeweiligen Schaltstellung des Bedienelementes unmittelbar am Schalter angeordnete Funktionssymbole zugeordnet sind. Denkbar ist zudem, dass das Bedienelement als Kipp- oder Wippschalter ausgebildet ist, so dass der Bediener einfach und komfortabel das Schalten in die verschiedenen Schaltstellungen bewirken kann.

Zur weiteren Optimierung des Reversiervorgangs liegt es im Rahmen der Erfindung, dass die dem Bedienelement zugeordneten Steuerfunktionen mit Betätigen des Bedienelementes auf einer in der Fahrerkabine angeordneten Anzeigeneinheit dem Bediener visualisierbar sind, so dass der Bediener optimal über den Reversiervorgang informiert ist. Denkbar ist zudem, dass Visualisierung auf einer außerhalb der Fahrerkabine angeordneten Anzeigeneinheit erfolgt.

Weitere Vorteile der Erfindung ergeben sich aus den weiteren Unteransprüchen. Ein Ausführungsbeispiel der Erfindung wird nachfolgend anhand der Zeichnung näher erläutert.

Es zeigt:

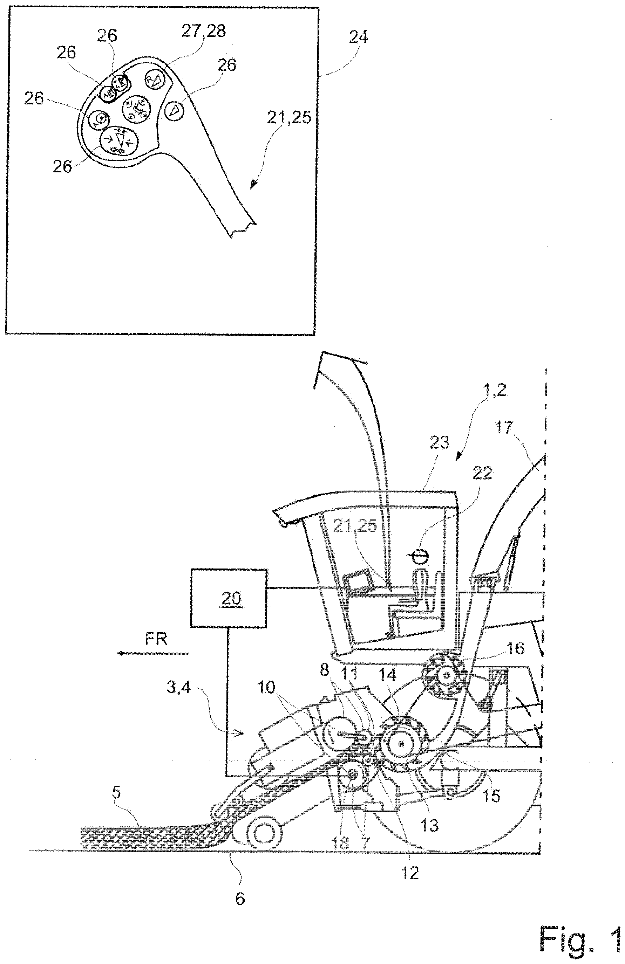

- Figur 1:: einen Feldhäcksler in einer schematisch dargestellten Seitenansicht und vergrößert dargestellten Multifunktionsgriff

Figur 1 zeigt eine schematische Seitenansicht einer als selbstfahrender Feldhäcksler 1 ausgeführten landwirtschaftlichen Erntemaschine 2. An dem dargestellten Feldhäcksler 1 ist frontseitig ein als Pick-Up 3 ausgebildetes Vorsatzgerät 4 angeordnet, welches in Abhängigkeit von der jeweils zur erntenden Erntegutart austauschbar ist. Die Pick-Up 3 dient dazu, das Erntegut 5 vom Feldboden 6 aufzunehmen und den Vorpresswalzen 7, 8 der Einzugsvorrichtung 9 zuzuführen.

Das ankommende Erntegut 5 wird von einem ersten Vorpresswalzenpaar 10 angenommen und verdichtet und zu einem zweiten Vorpresswalzenpaar 11 gefördert, welches das vorverdichtete Erntegut 5 weiter zu einem Erntegutstrang verdichtet und den Erntegutstrang über eine Gegenschneide 12 zu einer Häckseltrommel 13 fördert. An der unmittelbar an der Häckseltrommel 13 angeordneten Gegenschneide 12 wird der Erntegutstrang mit den Häckselmessern 14 der Häckseltrommel 13 zerkleinert. Das Erntegut 5 wird stromauf und weiter in den Auswurfschacht 15 gefördert. Innerhalb des Auswurfschachtes 15 ist ein Nachbeschleuniger 16 angeordnet, der das aus der Häckseltrommel 13 austretende Erntegut 5 weiter beschleunigt und durch einen Auswurfkrümmer 17 aus dem Feldhäcksler 1 herausfördert und dabei beispielsweise auf ein Transportfahrzeug überlädt. Der Antrieb des Feldhäckslers 1 und der zuvor genannten Arbeitsorgane erfolgt über wenigstens einen hier nicht dargestellten Antriebsmotor. Der nicht näher dargestellte Einzugsvorrichtungsantrieb und der Vorsatzgeräteantrieb erfolgen dabei durch separate unabhängig voneinander regelbare hier nicht näher dargestellte Hydraulikmotoren und nicht direkt drehzahlabhängig vom nicht dargestellten Antriebsmotor des Feldhäckslers 1. Die Nutzung von Elektromotoren oder mechanischen Antrieben ist denkbar.

Innerhalb der unteren Vorpresswalze 7 des ersten Vorpresswalzenpaares 10 ist eine Fremdkörpererkennungseinrichtung 18 in Form eines an sich bekannten und deshalb nicht näher dargestellten Metalldetektors 19 angeordnet, mit der metallische Teile im Erntegutstrom sensiert werden können. Das Vorsehen einer weiteren Fremdkörpererkennungseinrichtung, wie beispielsweise ein Steindetektor ist denkbar und liegt im Rahmen der Erfindung. Zudem ist es denkbar, dass der Erntemaschine 2 ein hier nicht näher dargestellter Sensor, wie z.B. ein Gewichtssensor, zur Ermittlung einer Überlastung bzw. Verstopfung eines Arbeitsorgans wie dem Vorsatzgerät 4 oder der Einzugsvorrichtung 9 oder der Häckseltrommel 13 zugeordnet ist, welcher das Antriebsmoment wenigstens einer Vorpresswalze 7, 8 der Einzugsvorrichtung 9 oder der Häckseltrommel 13 sensiert und bei einer Überschreitung eines Schwellwertes ein Signal an die Steuereinrichtung 20 weiterleitet, die das Signal als Überlastung oder Verstopfung bewertet und durch Ansteuerung der nicht näher dargestellten Antriebseinrichtungen der Einzugsvorrichtung 9 und des Vorsatzgerätes 4 einen Schnellstop auslöst.

Wenn, wie vorliegenden Ausführungsbeispiel durch das Auslösen des Metalldetektors 19 ein Reversieren des Vorsatzgerätes 4 und/oder der Einzugsvorrichtung 9 notwendig ist, ist in der Regel ein Bedienelement 21 vom Bediener 22 in der Fahrerkabine 23 zu betätigten, mit welchem gleichzeitig der Reversiervorgang des Vorsatzgerätes 4 und der Einzugsvorrichtung 9 gestartet wird. Nachteilig an dieser Ausführung ist insbesondere, dass neben der Beseitigung der Verstopfung insbesondere in der Einzugsvorrichtung 9 gleichzeitig vom Vorsatzgerät 4 bereits aufgenommenes Erntegut 5 wieder aus dem Vorsatzgerät 4 heraustransportiert wird, was bei häufigen Reversiervorgängen zu einem nicht zu vernachlässigenden Ernteverlust führen kann.

Um einen diesen Nachteil vermeidenden Reversiervorgang bewirken zu können, wirkt erfindungsgemäß die Steuereinrichtung 20 nun derart auf den Antrieb des Vorsatzgerätes 4 und den Antrieb der Einzugsvorrichtung 9 ein, dass beim Auftreten einer Verstopfung und/oder beim Eindringen von Fremdkörpern ein getrenntes Reversieren des Vorsatzgerätes 4 oder der Einzugsvorrichtung 9 ermöglicht wird.

Beispielhaft kann die Funktion der Steuerung des Reversiervorgangs wie folgt ablaufen: Damit der Bediener 22 nach Auslösen des Schnellstops, ausgelöst durch das Ansprechen des Metalldetektors 19 oder eines weiteren Sensors, die Verstopfung bzw. den Metallfund mittels des Reversiervorgangs beseitigen kann, steht die Steuereinrichtung 20 mit einem in der Fahrerkabine 23 angeordneten wenigstens ein Bedienelement aufweisenden Multifunktionsgriff 24 in Wirkverbindung, welcher im Fenster 25 vergrößert dargestellt ist. Der Reversiervorgang erfolgt mit Betätigung des Bedienelementes 21. Das Bedienelement 21 weist vorteilhaft wenigstens zwei nicht näher dargestellte Schaltstellungen auf, wobei den Schaltstellungen jeweils wenigstens eine frei definierbare Reversier-Steuerfunktion zugeordnet werden kann. Beispielhaft kann der ersten Schaltstellung die Steuerfunktion "Reversieren der Einzugsvorrichtung" zugeordnet werden, so dass mit Betätigen des Bedienelementes 21 und Einnahme der ersten Schaltstellung zunächst nur die angetriebenen Vorpresswalzen 7, 8 der Einzugsvorrichtung 9 reversiert werden, um eine Störung zu beseitigen. Dabei liegt es im Rahmen der Erfindung, dass der Bediener 22 nur kurzzeitig das Bedienelement 21 betätigen oder permanent "gedrückt halten" muss, um die Steuerfunktion "Reversieren der Einzugsvorrichtung" aktivieren zu können. Das permanente "gedrückt halten" des Bedienelementes bietet den Vorteil, dass der Reversiervorgang bewusst vom Bediener begleitet wird. Das alleinige Reversieren der Einzugsvorrichtung 9 ist insbesondere dann vorteilhaft, wenn nur eine Belastung der dem Vorsatzgerät 4 nachfolgenden Arbeitsorgane 13, 16 mittels nicht näher dargestellter Sensoren sensiert wird, das Vorsatzgerät 4 selbst jedoch nur mit einer geringen Erntegutmasse 5 beaufschlagt ist und somit das bereits vom Vorsatzgerät 4 aufgenommene Erntegut 5 nicht auf den Feldboden 6 zurücktransportiert werden muss und somit keinen Ernteverlust darstellt. Im Fall, dass vom bereits oben genannten Sensor, beispielsweise einem Gewichtssensor, auch eine einen Schwellwert überschreitende Überbelastung des Vorsatzgerätes 4 ermittelt wird, kann in der wenigstens einen weiteren Schaltstellung des Bedienelementes 21 die Steuerfunktion "zusätzliches Reversieren des Vorsatzgerätes" hinterlegt sein, so dass mit Einnahme dieser Schaltstellung dann zusätzlich über die Steuereinrichtung 20 auch der Antrieb des Vorsatzgerätes 4 angesteuert und das Reversieren des Vorsatzgerätes 4 bewirkt wird, um dann eine vollständige Störungsbeseitigung bewirken zu können. Die Aktivierung der der zweiten Schaltstellung zugeordneten Reversier-Steuerfunktion kann entsprechend der Aktivierung der ersten Steuerfunktion durch einmaliges Betätigen oder erforderliches permanentes "gedrückt halten" des Bedienelementes 21 erfolgen. Der Reversiervorgang wird durch das Zurückführen des Bedienelementes 21 in seine Ausgangstellung beendet. Im einfachsten Fall erfolgt dies durch den Bediener 22 selbst, anderenfalls ist es denkbar, dass die den Schaltstellungen zugeordneten Reversier-Steuerfunktionen nur innerhalb eines vorab definierten Zeitintervalls aktiv sind, so dass nach dessen Ablauf der Reversiervorgang automatisch beendet wird. Nach Beendigung des Reversiervorgangs können die gestoppten zuvor benannten Arbeitsorgane in an sich bekannter und deshalb hier nicht näher dargestellter Weise wieder angetrieben werden und den Erntebetrieb aufnehmen.

In einer vorteilhaften Weiterbildung der Erfindung ist es denkbar, dass die den Schaltstellungen zugeordneten Steuerfunktionen und damit das getrennte Reversieren des Vorsatzgerätes 4 und der Einzugsvorrichtung 9 nur aktivierbar ist, wenn der Metalldetektor 19 anspricht oder ein Sensor eine Überlastung der Erntemaschine 2 sensiert. Erfindungsgemäß kann es vorgesehen sein, dass die Freigabe des Schaltvorganges von der ersten Schaltstellung des Bedienelementes 21 in die wenigstens eine weitere Schaltstellung in Abhängigkeit von Betriebsparametern der Erntemaschine 2 erfolgt. Die Betriebsparameter werden dabei vorteilhaft von der Art der eingesetzten Erntegutaufnahmeeinrichtung und/oder Beaufschlagung der Erntemaschine 2 mit Erntegut und/oder die Belastung der Arbeitsorgane der Erntemaschine 2 gebildet, so dass das getrennte Reversieren der Einzugsvorrichtung 9 und des Vorsatzgerätes 4 angepasst an unterschiedliche Erntebedingungen gesteuert wird. Dabei können die Erntegutaufnahmeeinrichtungen 4 eine Pickup 3 oder ein Maisgebiss oder ein Grünfutterschneidwerk oder ein Maispflücker oder eine Rake-up oder ein Getreideschneidwerk sein.

Der im Fenster 24 vergrößert dargestellte Multifunktionsgriff 25 weist eine Mehrzahl von Bedienelementen 26 auf, wobei nur das Bedienelement 27 zur Aktivierung des Reversiervorgangs dient und näher beschrieben wird. Die übrigen Bedienelemente 26 sind beispielhaft gezeigt. Das Bedienelement 27 ist als kreisrunder Kipp- bzw. Wippschalter 28 ausgebildet. Dem Bedienelement 27 ist ein R und ein weiteres Funktionssymbol zugeordnet, zur Verdeutlichung, dass das Bedienelement 27 zur Aktivierung des Reversiervorgangs dient. Wie bereits zuvor beschrieben, weist das Bedienelement 27 erfindungsgemäß zwei Schaltstellung auf. Nach dem Auslösen des Schnellstops der Erntemaschine 2 wird mit Betätigung des Bedienelementes 27 und Einnahme der ersten Schaltstellung das Reversieren der angetriebenen Vorpresswalzen 7, 8 der Einzugsvorrichtung 9 aktiviert. Dabei ist die erste Schaltstellung eingenommen und die hinterlegte Steuerfunktion aktiviert, wenn der Kipp bzw. Wippschalter 28 einen ersten für den Bediener spürbaren Widerstand erreicht hat. Mit der Einnahme der zweiten Schaltstellung wird nun zusätzlich das Reversieren des Vorsatzgerätes 4 bewirkt. Dies wird erreicht, indem vom Bediener 22 der mit der ersten Schaltstellung erreichte Widerstand überwunden wird und der Kipp- bzw. Wippschalter 28 komplett durchgedrückt wird. Entsprechende hier nicht näher dargestellte Signale werden an die mit dem Bedienelement 27 in Wirkverbindung stehende Steuereinrichtung 20 übermittelt, um entsprechend die Antriebssteuerung der Einzugsvorrichtung 9 und des Vorsatzgerätes 4 vorzunehmen. Es liegt im Rahmen der Erfindung, dass die den Schaltstellungen zugeordneten Funktionen bezüglich der Aktivierung des Reversiervorgangs frei definierbar sind, so dass zur Störungsbeseitigung das getrennte Reversieren unter Berücksichtigung der Präferenzen des Bedieners 22 kann. Vorzugsweise werden die Reversier-Steuerfunktionen vom Bediener 22 in der Steuereinrichtung 20 wiederabrufbar hinterlegt werden. Aufgrund der Unterschiede zwischen Halm-Erntegut und Mais-Erntegut ist es denkbar, dass der Ablauf des Reversiervorgangs und somit die von der Steuereinrichtung 20 automatisch oder manuell aktivierten Reversier-Steuerfunktionen auf der Grundlage der Art des Erntematerials einzustellen ist. Aus diesem Grunde kann die Steuereinrichtung 20 so konfiguriert sein, dass sie aus mehreren möglichen Reversier-Steuerfunktionen die jeweiligen Steuerfunktion in Abhängigkeit von der Art des Vorsatzgerätes 4 wählt, das an der Einzugsvorrichtung 9 befestigt ist. Zur Erkennung des jeweiligen montierten Erntevorsatzgerätes 4 können an sich bekannte und hier nicht dargestellte Sensoren dienen.

Nach einer alternativen Ausführungsform des Bedienelementes 27 kann dieses als mehrstufiger Dreh- oder Schiebeschalter ausgebildet sein, wobei wenigstens zwei Schaltstellungen eingenommen werden können. Seitlich neben dem Dreh-oder Schiebeschalter können die entsprechenden Funktionssymbole zur Darstellung der jeweiligen Reversierfunktion angezeigt werden, wobei die jeweilige Reversierfunktion durch Verstellung des Dreh- oder Schiebeschalters korrespondierend zu dem entsprechenden Funktionssymbol erfolgt. Nach einer weiteren Ausführungsform können die Funktionssymbole zur Darstellung der jeweiligen Reversierfunktion alternativ oder zusätzlich auf der elektronischen Anzeigeeinheit 29 angezeigt werden, so dass der Bediener 22 seinen Blick nur auf die Anzeigeneinheit 29 richten muss, um über den Reversiervorgang informiert zu sein.

Es liegt im Rahmen des Könnens des Fachmanns die beschriebene landwirtschaftliche Erntemaschine in nicht dargestellter Weise abzuwandeln, um die beschriebenen Effekte abzuwandeln, ohne den Rahmen der Erfindung zu verlassen.

## Patentansprüche

1. Landwirtschaftliche Erntemaschine, mit einer Erntegutaufnahmeeinrichtung und einer Einzugsvorrichtung, die zur Beseitigung einer Verstopfung und/oder eingedrungener unerwünschter Fremdkörper reversierbar sind und einer Steuereinrichtung für den Antrieb der Erntegutaufnahmeeinrichtung und der Einzugsvorrichtung, wobei
die Steuereinrichtung (20) derart auf den Antrieb der Erntegutaufnahmeeinrichtung (3,4) und Einzugsvorrichtung (9) einwirkt, dass beim Auftreten einer Verstopfung und/oder eingedrungener Fremdkörper ein getrenntes Reversieren der Erntegutaufnahmeeinrichtung (3,4) und der Einzugsvorrichtung (9) bewirkt wird, **dadurch gekennzeichnet, dass** die Steuereinrichtung (20) mit einem in einer Fahrerkabine (23) angeordneten Bedienelement (21) in Wirkverbindung steht und die Steuereinrichtung (20) das getrennte Reversieren der Erntegutaufnahmeeinrichtung (3,4) und der Einzugsvorrichtung (9) bewirkt, wenn das eine Bedienelement (21) betätigt wird, wobei das Bedienelement (21) zwei Schaltstellungen aufweist und das Reversieren der Einzugsvorrichtung (9) aktiviert wird, wenn die erste Schaltstellung eingenommen wird, und zusätzlich das Reversieren der Erntegutaufnahmeeinrichtung (3,4) aktiviert wird, wenn die zweite Schaltstellung eingenommen wird.

2. Landwirtschaftliche Erntemaschine nach wenigstens einem der vorhergehenden Ansprüche,
**dadurch gekennzeichnet, dass**
den wenigstens zwei Schaltstellungen jeweils zumindest eine definierbare Reversier-Steuerfunktion zugeordnet werden kann.

3. Landwirtschaftliche Erntemaschine nach wenigstens einem der vorhergehenden Ansprüche,
**dadurch gekennzeichnet, dass**
die Reversier-Steuerfunktionen vom Bediener (22) vorgebbar sind.

4. Landwirtschaftliche Erntemaschine nach wenigstens einem der vorhergehenden Ansprüche,
**dadurch gekennzeichnet, dass**
die definierte Reversier-Steuerfunktionen in Abhängigkeit von der jeweils angebauten Erntegutaufnahmeeinrichtung (3, 4) automatisch vorgegeben werden.

5. Landwirtschaftliche Erntemaschine nach wenigstens einem der vorhergehenden Ansprüche,
**dadurch gekennzeichnet, dass**
die Reversier-Steuerfunktionen nur aktivierbar sind, wenn eine Fremdkörpererkennungsvorrichtung (18) zur Detektion von Fremdkörpern im Erntegutfluss und/oder ein Sensor zur Ermittlung von Überlastungen der Erntemaschine anspricht.

6. Landwirtschaftliche Erntemaschine nach wenigstens einem der vorhergehenden Ansprüche,
**dadurch gekennzeichnet, dass**
das Aktivieren der der ersten Schaltstellung zugeordneten Reversier-Steuerfunktion nur im betätigten Zustand des Bedienelementes (21) erfolgt.

7. Landwirtschaftliche Erntemaschine nach wenigstens einem der vorhergehenden Ansprüche,
**dadurch gekennzeichnet, dass**
die Freigabe des Schaltvorgangs von der ersten Schaltstellung in die wenigstens eine weitere Schaltstellung in Abhängigkeit von Betriebsparametern der Erntemaschine (2) erfolgt.

8. Landwirtschaftliche Erntemaschine nach wenigstens einem der vorhergehenden Ansprüche,
**dadurch gekennzeichnet, dass**
die Betriebsparameter die Art der Erntegutaufnahmeeinrichtung (3,4) und/oder die Beaufschlagung der Erntemaschine (2) mit Erntegut (5) und/oder die Belastung der Arbeitsorgane der Erntemaschine ist.

9. Landwirtschaftliche Erntemaschine nach wenigstens einem der vorhergehenden Ansprüche,
**dadurch gekennzeichnet, dass**
die den Schaltstellungen zugeordneten Steuerfunktionen mit Einnahme der Schaltstellung für ein definierbares Zeitintervall aktiviert sind.

10. Landwirtschaftliche Erntemaschine nach wenigstens einem der vorhergehenden Ansprüche,
**dadurch gekennzeichnet, dass**
das Bedienelement (21) als mehrstufiger Dreh- oder Schiebeschalter ausgebildet ist, wobei den Schaltstellungen des Schalters jeweils unmittelbar am Schalter angeordnete Funktionssymbole angeordnet sind.

11. Landwirtschaftliche Erntemaschine nach wenigstens einem der vorhergehenden Ansprüche,
**dadurch gekennzeichnet, dass**
das Bedienelement (21) als ein Kipp- oder Wippschalter (28) ausgebildet ist.

12. Landwirtschaftliche Erntemaschine nach wenigstens einem der vorhergehenden Ansprüche,
**dadurch gekennzeichnet, dass**
die dem Bedienelement (21) zugeordneten Steuerfunktionen mit Betätigen des Bedienelementes (21) auf einer in der Fahrerkabine (23) angeordneten Anzeigeneinheit (29) visualisierbar sind.

13. Landwirtschaftliche Erntemaschine nach wenigstens einem der vorhergehenden Ansprüche,
**dadurch gekennzeichnet, dass**
die Erntegutaufnahmeeinrichtung (3,4) eine Pickup (3) oder ein Maisgebiss oder ein Grünfutterschneidwerk oder ein Maispflücker oder eine Rake-up oder ein Getreideschneidwerk ist.

14. Landwirtschaftliche Erntemaschine nach wenigstens einem der vorhergehenden Ansprüche,
**dadurch gekennzeichnet, dass**
die Erntemaschine (2) ein Feldhäcksler (1), ein Mähdrescher oder eine gezogenes Gerät ist.

## Claims

1. An agricultural harvester comprising a crop material pickup device and an intake device which are reversible to remove a blockage and/or unwanted foreign bodies which have entered, and a control device for the drive of the crop material pickup device and the intake device,
wherein
the control device (20) acts on the drive of the crop material pickup device (3, 4) and the intake device (9) in such a way that upon the occurrence of a blockage and/or entering foreign bodies separate reversal of the crop material pickup device (3, 4) and the intake device (9) is effected, **characterised in that** the control device (20) is operatively connected to an operating element (21) in a driver cab (23) and the control device (20) causes separate reversal of the crop material pickup device (3, 4) and the intake device (9) when the operating element (21) is actuated, wherein the operating element (21) has two switching positions and reversal of the intake device (9) is activated when the first switching position is assumed and reversal of the crop material pickup device (3, 4) is additionally activated when the second switching position is assumed.

2. An agricultural harvester according to claim 1
**characterised in that**
at least one respective definable reversing control function can be associated with the at least two switching positions.

3. An agricultural harvester according to at least one of the preceding claims
**characterised in that**
the reversing control functions can be predetermined by the operator (22).

4. An agricultural harvester according to at least one of the preceding claims
**characterised in that**
the defined reversing control functions are automatically predetermined in dependence on the respectively mounted crop material pickup device (3, 4).

5. An agricultural harvester according to at least one of the preceding claims
**characterised in that**
the reversing control functions can be activated only when a foreign body detection device (18) for detection of foreign bodies in the crop material flow and/or a sensor for ascertaining overloadings of the harvester responds.

6. An agricultural harvester according to at least one of the preceding claims
**characterised in that**
activation of the reversing control function associated with the first switching position is effected only in the actuated condition of the operating element (21).

7. An agricultural harvester according to at least one of the preceding claims
**characterised in that**
enablement of the switching process from the first switching position into the at least one further switching position is effected in dependence on operating parameters of the harvester (2).

8. An agricultural harvester according to at least one of the preceding claims
**characterised in that**
the operating parameters are the nature of the crop material pickup device (3, 4) and/or the supply to the harvester (2) with crop material (5) and/or the loading on the working members of the harvester.

9. An agricultural harvester according to at least one of the preceding claims
**characterised in that**
the control functions associated with the switching positions are activated with the assumption of the switching position for a definable time interval.

10. An agricultural harvester according to at least one of the preceding claims
**characterised in that**
the operating element (21) is in the form of a multi-stage rotary or sliding switch, wherein function symbols arranged on the switch are respectively directly associated with the switching positions of the switch.

11. An agricultural harvester according to at least one of the preceding claims
**characterised in that**
the operating element (21) is in the form of a tilt or rocker switch (28).

12. An agricultural harvester according to at least one of the preceding claims
**characterised in that**
the control functions associated with the operating element (21) can be displayed with actuation of the operating element (21) on a display unit (29) in the driver cab (23).

13. An agricultural harvester according to at least one of the preceding claims
**characterised in that**
the crop material pickup device (3, 4) is a pickup (3) or a corn header or a green fodder cutting mechanism or a corn picker or a rake-up or a grain cutting mechanism.

14. An agricultural harvester according to at least one of the preceding claims
**characterised in that**
the harvester (2) is a forage harvester (1), a combine harvester or a towed appliance.

## Revendications

1. Machine agricole de récolte, comprenant un équipement de ramassage de produit de récolte et un dispositif d'amenée qui sont réversibles pour supprimer un engorgement et/ou des corps étrangers indésirables qui y ont pénétré et comprenant un équipement de commande pour l'entraînement de l'équipement de ramassage de produit de récolte et du dispositif d'amenée, l'équipement de commande (20) agissant sur l'entraînement de l'équipement de ramassage de produit de récolte (3, 4) et du dispositif d'amenée (9) de façon qu'à l'apparition d'un engorgement et/ou d'une pénétration de corps étranger, une inversion séparée de l'équipement de ramassage de produit de récolte (3, 4) et du dispositif d'amenée (9) soit effectuée, **caractérisée en ce que** l'équipement de commande (20) est en liaison active avec un élément de manœuvre (21) disposé dans la cabine de conduite (23) et l'équipement de commande (20) effectue l'inversion séparée de l'équipement de ramassage de produit de récolte (3, 4) et du dispositif d'amenée (9) lorsque le un élément de manœuvre (21) est actionné, l'élément de manœuvre (21) comportant deux positions de commutation et l'inversion du dispositif d'amenée (9) étant activée lorsque la première position de commutation est adoptée et, de plus, l'inversion de l'équipement de ramassage de produit de récolte (3, 4) étant activée lorsque la seconde position de commutation est adoptée.

2. Machine agricole de récolte selon au moins une des revendications précédentes, **caractérisée en ce qu'**aux au moins deux positions de commutation peut être associée respectivement au moins une fonction de commande d'inversion définissable.

3. Machine agricole de récolte selon au moins une des revendications précédentes, **caractérisée en ce que** les fonctions de commande d'inversion sont prescriptibles par l'utilisateur (22).

4. Machine agricole de récolte selon au moins une des revendications précédentes, **caractérisée en ce que** les fonctions de commande d'inversion définies sont prescrites automatiquement en fonction de l'équipement de ramassage de produit de récolte (3, 4) respectivement monté.

5. Machine agricole de récolte selon au moins une des revendications précédentes, **caractérisée en ce que** les fonctions de commande d'inversion ne sont activables que si un dispositif de détection de corps étranger (18) apte à détecter des corps étrangers dans le flux de produit récolté et/ou un capteur d'enregistrement de surcharges de la machine de récolte réagissent.

6. Machine agricole de récolte selon au moins une des revendications précédentes, **caractérisée en ce que** l'activation de la fonction de commande d'inversion associée à la première position de commutation n'intervient qu'à l'état actionné de l'élément de manœuvre (21).

7. Machine agricole de récolte selon au moins une des revendications précédentes, **caractérisée en ce que** l'autorisation de passer de la première position de commutation à la au moins une autre position de commutation intervient en fonction de paramètres d'exploitation de la machine de récolte (2).

8. Machine agricole de récolte selon au moins une des revendications précédentes, **caractérisée en ce que** les paramètres d'exploitation sont le type de l'équipement de ramassage de produit de récolte (3, 4) et/ou la sollicitation de la machine de récolte (2) avec du produit récolté (5) et/ou la charge imposée aux organes de travail de la machine de récolte.

9. Machine agricole de récolte selon au moins une des revendications précédentes, **caractérisée en ce que** les fonctions de commande associées aux positions de commutation sont activées pendant un intervalle de temps définissable lors de l'adoption de la position de commutation.

10. Machine agricole de récolte selon au moins une des revendications précédentes, **caractérisée en ce que** l'élément de manœuvre (21) est conformé en commutateur rotatif ou coulissant à plusieurs étages, aux positions de commutation du commutateur étant associés respectivement des symboles de fonctions disposés directement sur le commutateur.

11. Machine agricole de récolte selon au moins une des revendications précédentes, **caractérisée en ce que** l'élément de manœuvre (21) est conformé en commutateur basculant ou à bascule (28).

12. Machine agricole de récolte selon au moins une des revendications précédentes, **caractérisée en ce que** les fonctions de commande associées à l'élément de manœuvre (21) sont visualisables, lors de l'actionnement de l'élément de manœuvre (21), sur une unité d'affichage (29) disposée dans la cabine de conduite (23).

13. Machine agricole de récolte selon au moins une des revendications précédentes, **caractérisée en ce que** l'équipement de ramassage de produit de récolte (3, 4) est un pick-up (3) ou un bec maïs ou un tablier de coupe de fourrage vert ou un cueilleur à maïs ou un Rake-up ou un tablier de coupe de céréales.

14. Machine agricole de récolte selon au moins une des revendications précédentes, **caractérisée en ce que** la machine de récolte (2) est une ensileuse (1), une moissonneuse-batteuse ou un outil tracté.
